# EUROPEAN PATENT APPLICATION

(11) **EP 4 625 861 A1**
(43) Date of publication of application: **01.10.2025**
(21) Application number: 23910197.5
(22) Date of filing: 14.12.2023
(51) Int. Cl.: H04L 1/1812

(54) **COMMUNICATION METHOD AND APPARATUS, AND DEVICE**

(30) Priority: 30.12.2022 CN 202211727912
(71) Applicant: Huawei Technologies Co., Ltd., Shenzhen, Guangdong 518129 (CN)
(72) Inventor: XU, Rui, Shenzhen, Guangdong 518129 (CN); CHEN, Erkai, Shenzhen, Guangdong 518129 (CN); QIN, Yi, Shenzhen, Guangdong 518129 (CN); CAO, Youlong, Shenzhen, Guangdong 518129 (CN); PANG, Xu, Shenzhen, Guangdong 518129 (CN)
(74) Representative: Körber, Martin Hans
(86) International application number: PCT/CN2023/138925
(87) International publication number: WO 2024/140267

(57) **Abstract**

A communication method, apparatus, and device are provided. In the method, a terminal device sends uplink data corresponding to M HARQ processes, and receives first indication information, where the first indication information indicates whether to start a DRX uplink retransmission timer corresponding to N HARQ processes in the M HARQ processes; and the terminal device starts the DRX uplink retransmission timer when the first indication information indicates to start the DRX uplink retransmission timer, and receives second indication information when the DRX uplink retransmission timer runs, where the second indication information indicates retransmission of uplink data corresponding to the N HARQ processes. The terminal device can determine, in time based on the first indication information, whether to start the DRX uplink retransmission timer. When uplink data corresponding to a HARQ process needs to be retransmitted, the DRX uplink retransmission timer is started, or when no uplink data that needs to be retransmitted, the DRX uplink timer may not be started, thereby reducing power consumption of the terminal device.

## Description

### CROSS-REFERENCE TO RELATED APPLICATIONS

This application claims priority to Chinese Patent Application No. 202211727912.X, filed with the China National Intellectual Property Administration on December 30, 2022 and entitled "DISCONTINUOUS RECEPTION DRX CONFIGURATION METHOD AND APPARATUS, AND DEVICE", which is incorporated herein by reference in its entirety.

### TECHNICAL FIELD

This application relates to the field of wireless communication, and in particular, to a communication method, apparatus, and device.

### BACKGROUND

In recent years, with continuous development of a 5^{th} generation (5^{th} generation, 5G) communication system, a data transmission delay is continuously reduced, and a transmission capacity is increasingly large. The 5G communication system is gradually introduced into some multimedia services with high requirements on real-time performance and data capacity, such as video transmission, cloud gaming (cloud gaming, CG), and extended reality (extended reality, XR). XR includes virtual reality (virtual reality, VR) and augmented reality (augmented reality, AR).

As a communication transmission rate rapidly increases, a real-time video transmission service has gradually become one of core services in a current network. With continuous progress and improvement of XR technologies, related industries have also developed vigorously. VR, as a type of XR, has entered various fields that are closely related to people's production and life, such as education, entertainment, military affairs, medical care, environmental protection, transportation, and public health. Compared with a conventional video service, VR has multiple viewing angles, strong interaction, and other advantages, providing a user with new visual experience. In addition to smartphones, people may further use terminal devices such as head mounted displays (head mounted displays, HMDs) or smart glasses (such as VR glasses and AR glasses) to improve XR experience.

However, for uplink data, a network device does not feed back an acknowledgment/negative acknowledgment (ACK/NACK) to the terminal device. Therefore, the terminal device cannot determine whether to start a discontinuous reception (discontinuous reception, DRX) uplink retransmission timer to perform retransmission.

### SUMMARY

This application provides a communication method, apparatus, and device, to resolve a problem that a terminal device cannot determine, in time, whether to start a DRX uplink retransmission timer.

According to a first aspect, an embodiment of this application provides a communication method. The method may be performed by a terminal device, may be performed by a component (for example, a processor, a chip, or a chip system) of the terminal device, or may be implemented by a logical node, a logical module, or software that can implement all or some functions of the terminal device. The method includes: sending uplink data corresponding to M hybrid automatic repeat request HARQ processes, where M is an integer greater than or equal to 1; receiving first indication information, where the first indication information indicates whether to start a discontinuous reception DRX uplink retransmission timer corresponding to N HARQ processes of the M HARQ processes, and N is a positive integer less than or equal to M; and starting the DRX uplink retransmission timer when the first indication information indicates to start the DRX uplink retransmission timer, and receiving second indication information when the DRX uplink retransmission timer runs, where the second indication information indicates retransmission of uplink data corresponding to the N HARQ processes.

In the DRX configuration method provided in the foregoing embodiment of this application, a network device notifies, in time by using the first indication information, the terminal device whether to stat the DRX uplink retransmission timer. Therefore, the terminal device can determine, in time based on the first indication information, whether to start the DRX uplink retransmission timer. When there is uplink data corresponding to a HARQ process that needs to be retransmitted, the terminal device starts the DRX uplink retransmission timer. When there is no uplink data corresponding to a HARQ process that needs to be retransmitted, the terminal device does not need to start the DRX uplink retransmission timer, thereby lowering power consumption of the terminal device.

In a possible implementation, the first indication information indicates whether to start a DRX uplink retransmission timer corresponding to one HARQ process. In this implementation, the first indication information may indicate whether to start a DRX uplink retransmission timer corresponding to one HARQ process. The network device may indicate, by using M pieces of first indication information respectively, whether to start DRX uplink retransmission timers corresponding to the M HARQ processes, so that the terminal device can determine, in time, DRX uplink retransmission timers corresponding to HARQ processes to be started.

In a possible implementation, the first indication information indicates whether to start a DRX uplink retransmission timer corresponding to a plurality of HARQ processes. In this implementation, the first indication information may indicate whether to start the DRX uplink retransmission timer corresponding to the plurality of HARQ processes. For example, the first indication information may indicate whether to start the DRX uplink retransmission timer corresponding to the M HARQ processes, facilitating lowering of signaling overheads.

In a possible implementation, a plurality of HARQ processes correspond to one DRX uplink retransmission timer. The terminal device may provide one DRX uplink retransmission timer for a plurality of HARQ processes, to simplify an operation of the terminal device, facilitating lowering of power consumption of the terminal device.

In a possible implementation, a plurality of HARQ processes respectively correspond to a plurality of DRX uplink retransmission timers. The terminal device may provide a corresponding DRX uplink retransmission timer for each HARQ process, to monitor second indication information corresponding to each HARQ process during running of each timer, so that the terminal device determines a HARQ process corresponding to the second indication information.

In a possible implementation, the first indication information includes information indicating N. The first indication information includes the information indicating the N, so that the terminal device can quickly determine a quantity of HARQ processes on which process retransmission needs to be performed. In addition, when a timing time length of the DRX uplink retransmission timer is related to a value of N, the terminal device can also quickly determine the timing time length of the DRX uplink retransmission timer based on the value of N.

In a possible implementation, a timing time length of the DRX uplink retransmission timer is related to N. In an implementation, a larger value of N indicates a longer timing time length of the DRX uplink retransmission timer, that is, a longer maximum time length in which the terminal device can monitor the second indication information. This helps the network device perform scheduling, and also helps the terminal device fully receive the second indication information sent by the network device.

In a possible implementation, receiving the first indication information includes: receiving the first indication information from a first moment, where the first moment is one of the following: a moment after a first time length since the end of sending the uplink data, where the first time length is a downlink feedback information DFI delay time length, or the first time length is configured by the network device, for example, a network adds a new parameter in control signaling to configure the first time length, or configures a new timer, and a timing time length of the new timer is the first time length; or an expiration moment of an uplink HARQ round-trip time timer. After sending the uplink data, the terminal device may wait for a period of time and then start to monitor the first indication information, and wait for the network device to receive and parse the uplink data. In the waiting time, the terminal device does not need to monitor the first indication information sent by the network device, to lower power consumption of the terminal device.

In a possible implementation, after receiving the second indication information, the method further includes: stopping running the DRX uplink retransmission timer. After receiving the second indication information, the terminal device may stop running the DRX uplink retransmission timer, that is, no longer monitor the second indication information sent by the network device, to lower power consumption of the terminal device.

In a possible implementation, the method further includes: skipping starting the DRX uplink retransmission timer when the first indication information indicates to skip starting the DRX uplink retransmission timer. When the first indication information indicates to skip starting the DRX uplink retransmission timer, it indicates that there is no HARQ process that needs to be retransmitted. In this case, the network device skips starting the DRX uplink retransmission timer, and skips monitoring the second indication information, to lower power consumption of the terminal device.

In a possible implementation, the first indication information is carried in a wake-up signal WUS; or the first indication information is carried in a low power WUS; or the first indication information is included in DFI.

According to a second aspect, an embodiment of this application provides a communication method. The method may be performed by a network device, may be performed by a component (for example, a processor, a chip, or a chip system) of the network device, or may be implemented by a logical node, a logical module, or software that can implement all or some functions of the network device. The method includes: receiving uplink data corresponding to M hybrid automatic repeat request HARQ processes, where M is an integer greater than or equal to 1; sending first indication information, where the first indication information indicates whether to start a discontinuous reception DRX uplink retransmission timer corresponding to N HARQ processes of the M HARQ processes, and N is a positive integer less than or equal to M; and starting the DRX uplink retransmission timer when the first indication information indicates to start the DRX uplink retransmission timer, and sending second indication information when the DRX uplink retransmission timer runs, where the second indication information indicates retransmission of uplink data corresponding to the N HARQ processes.

In a possible implementation, the first indication information indicates whether to start a DRX uplink retransmission timer corresponding to one HARQ process.

In a possible implementation, the first indication information indicates whether to start a DRX uplink retransmission timer corresponding to a plurality of HARQ processes.

In a possible implementation, a plurality of HARQ processes correspond to one DRX uplink retransmission timer.

In a possible implementation, a plurality of HARQ processes respectively correspond to a plurality of DRX uplink retransmission timers.

In a possible implementation, the first indication information includes information indicating N.

In a possible implementation, a timing time length of the DRX uplink retransmission timer is related to N.

In a possible implementation, sending the first indication information includes: sending the first indication information from a first moment, where the first moment is one of the following: a moment after a first time length since the end of sending the uplink data, where the first time length is a downlink feedback information DFI delay time length; or an expiration moment of an uplink HARQ round-trip time timer.

In a possible implementation, the first indication information is carried in a wake-up signal WUS; or the first indication information is carried in a low power WUS; or the first indication information is included in DFI.

According to a third aspect, an embodiment of this application provides a communication apparatus. The communication apparatus includes modules/units for performing the method according to any one of the first aspect or the possible implementations of the first aspect. The apparatus may be a terminal device, or may be a component (for example, a processor, a chip, or a chip system) of the terminal device, or may be a logical node, a logical module, or software that can implement all or some functions of the terminal device. These modules/units may be implemented by hardware, or may be implemented by hardware executing corresponding software.

For example, the communication apparatus may include a processing module and an interface module. Specifically, the interface module is configured to send uplink data corresponding to M HARQ processes, where M is an integer greater than or equal to 1. The interface module is further configured to receive first indication information, where the first indication information indicates whether to start a DRX uplink retransmission timer corresponding to N HARQ processes of the M HARQ processes, and N is a positive integer less than or equal to M. The processing module is configured to start the DRX uplink retransmission timer when the first indication information indicates to start the DRX uplink retransmission timer; and when the DRX uplink retransmission timer runs, the interface module is further configured to receive second indication information, where the second indication information indicates retransmission of uplink data corresponding to the N HARQ processes.

According to a fourth aspect, an embodiment of this application provides a communication apparatus. The communication apparatus includes modules/units for performing the method according to any one of the second aspect or the possible implementations of the second aspect. The apparatus may be a network device, or may be a component (for example, a processor, a chip, or a chip system) of the network device, or may be a logical node, a logical module, or software that can implement all or some functions of the network device. These modules/units may be implemented by hardware, or may be implemented by hardware executing corresponding software.

For example, the communication apparatus may include a processing module and an interface module. Specifically, the interface module is configured to receive uplink data corresponding to M HARQ processes, where M is an integer greater than or equal to 1. The interface module is further configured to send first indication information, where the first indication information indicates whether to start a DRX uplink retransmission timer corresponding to N HARQ processes of the M HARQ processes, and N is a positive integer less than or equal to M. If the first indication information indicates to start the DRX uplink retransmission timer, the processing module is configured to start the DRX uplink retransmission timer, and the interface module is further configured to send second indication information when the DRX uplink retransmission timer runs, where the second indication information indicates retransmission of uplink data corresponding to the N HARQ processes.

According to a fifth aspect, an embodiment of this application provides a communication apparatus. The apparatus includes a processor, the processor is coupled to a memory, the memory is configured to store a program or instructions, and when the program or the instructions are executed by the processor, the communication device is enabled to perform the method according to any one of the first aspect or the possible implementations of the first aspect. The apparatus may be a terminal device, or may be a component (for example, a processor, a chip, or a chip system) of the terminal device, or may be a logical node, a logical module, or software that can implement all or some functions of the terminal device.

According to a sixth aspect, an embodiment of this application provides a communication apparatus. The apparatus includes a processor, the processor is coupled to a memory, the memory is configured to store a program or instructions, and when the program or the instructions are executed by the processor, the communication device is enabled to perform the method according to any one of the second aspect or the possible implementations of the second aspect. The apparatus may be a network device, or may be a component (for example, a processor, a chip, or a chip system) of the network device, or may be a logical node, a logical module, or software that can implement all or some functions of the network device.

According to a seventh aspect, an embodiment of this application provides a computer-readable storage medium. The computer-readable storage medium stores instructions. When the instructions run on a computer, the computer is enabled to perform the method according to any one of the first aspect and the implementations of the first aspect, or perform the method according to any one of the second aspect and the implementations of the second aspect.

According to an eighth aspect, an embodiment of this application provides a computer program product including instructions. When the instructions run on a computer, the computer is enabled to perform the method according to any one of the first aspect and the implementations of the first aspect, or perform the method according to any one of the second aspect and the implementations of the second aspect.

According to a ninth aspect, an embodiment of this application provides a chip, including a processor. The processor is coupled to a memory. The memory is configured to store instructions. When the instructions are executed by the processor, the chip is enabled to implement the method according to any one of the first aspect, the second aspect, the possible implementations of the first aspect, or the possible implementations of the second aspect.

According to a tenth aspect, an embodiment of this application provides a communication system, including the apparatus according to the third aspect and the apparatus according to the fourth aspect.

According to an eleventh aspect, an embodiment of this application provides a communication system, including the apparatus according to the fifth aspect and the apparatus according to the sixth aspect.

For technical effects that can be achieved by any one of the implementations of any one of the second aspect to the eleventh aspect, refer to the descriptions of technical effects that can be achieved in the corresponding implementation solution in the first aspect. Repeated parts are not described herein.

### BRIEF DESCRIPTION OF DRAWINGS

FIG. 1 is a diagram of a transmission rate of a frame of picture;
FIG. 2 is a diagram of a DRX cycle;
FIG. 3 is a diagram of a short DRX cycle and a long DRX cycle;
FIG. 4 is a diagram of DRX downlink retransmission;
FIG. 5 is a diagram of monitoring a WUS by a terminal device;
FIG. 6 is a diagram of a system architecture according to an embodiment of this application;
FIG. 7 is a schematic flowchart of a DRX configuration method according to an embodiment of this application;
FIG. 8(a) and FIG. 8(b) are diagrams of a type of first indication information according to an embodiment of this application;
FIG. 9 is a diagram of another type of first indication information according to an embodiment of this application;
FIG. 10 is a diagram of still another type of first indication information according to an embodiment of this application;
FIG. 11(a), FIG. 11(b), FIG. 11(c), and FIG. 11(d) are diagrams of a time period for monitoring first indication information according to an embodiment of this application;
FIG. 12 is a diagram of a timing time length of a DRX uplink retransmission timer according to an embodiment of this application;
FIG. 13 is a diagram of a structure of a communication apparatus according to an embodiment of this application;
FIG. 14 is a diagram of a structure of another communication apparatus according to an embodiment of this application; and
FIG. 15 is a diagram of a structure of still another communication apparatus according to an embodiment of this application.

### DESCRIPTION OF EMBODIMENTS

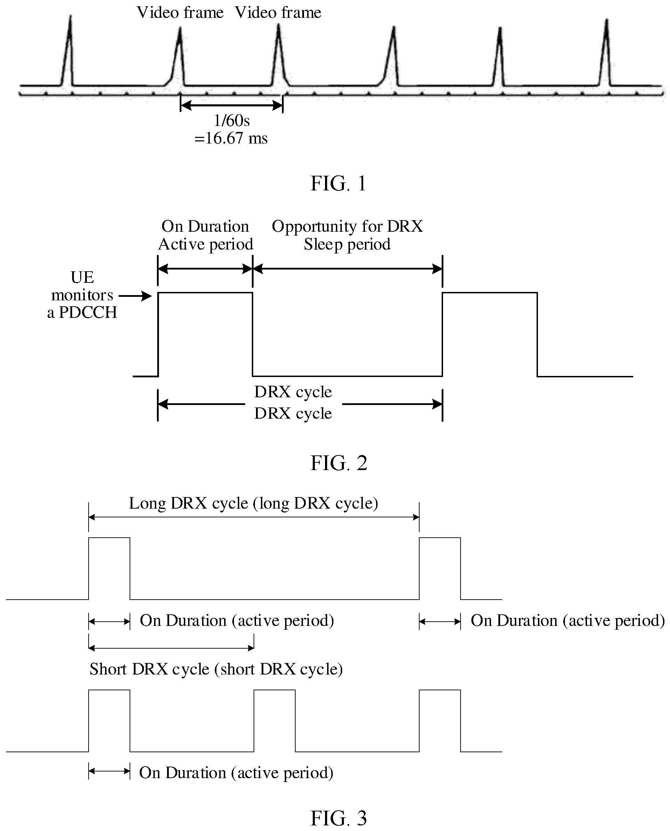

Service models of an XR transmission service and a video transmission service are usually that uplink and downlink data are periodically transmitted based on frame rates. As shown in FIG. 1, ideally, one frame of picture is transmitted every 16.67 milliseconds for a video with a frame rate of 60 frames per second (frames per second, FPS). In addition, amounts of data of an XR transmission service and a video service are usually large. For example, a size of a 4K video frame is about 30 KB to 100 KB. In addition, sizes of different video frames usually vary. Because different video frames have different compression ratios and different frame types, sizes of the different video frames also vary significantly.

Different XR services have different uplink and downlink service models. A display change of scene content of VR is caused by a posture or location change of a terminal device. Therefore, uplink transmission of data of a VR service is mainly for location and posture information, with a small amount of data which is usually only tens of kilobits per second (kilobits per second, kbps). Downlink transmission is mainly for a rendered video stream with a large amount of data which can reach tens to hundreds of Mbps. Different from that of VR, a display change of scene content of AR is caused by a change of a fixation focus target and a change of a spatial relationship (action) between a location and a fixation point. Uplink transmission includes visual information (including depth information and the like) required for perception. Therefore, uplink transmission of data of an AR service is mainly for a clear and stable picture or video stream with a large amount of data. Alternatively, uplink transmission of data may be for environment feature information. Based on industry research and evaluation, a network uplink rate required for initial experience of an interactive AR service is approximately 2 Mbit/s, and a network uplink rate required for advanced experience is 10 Mbit/s to 20 Mbit/s. Compared with cloud (cloud) VR, cloud AR has a higher requirement for an uplink transmission rate, making uplink transmission more challenging.

For the XR and video transmission services, because generation and arrival of uplink and downlink data packets are not continuous, on a terminal device side, downlink control signaling of a network device is monitored in different slots, to perform uplink and downlink data transmission, but power consumption of the terminal device is increased. When no data is transmitted, the terminal device may stop receiving a physical downlink control channel (physical downlink control channel, PDCCH) (in this case, the terminal device stops PDCCH blind detection), to reduce power consumption, thereby increasing battery use time. A discontinuous reception (discontinuous reception, DRX) technology can achieve power saving (power saving). A basic mechanism of DRX is to configure a DRX cycle (DRX cycle) for the terminal device. As shown in FIG. 2, in an active period (on duration), the terminal device normally monitors the PDCCH, and in a sleep period (opportunity for DRX), the terminal device may enter a sleep state, and does not receive the PDCCH, to reduce power consumption. It should be noted that the terminal device in the sleep state only does not receive the PDCCH, but may receive data from another physical channel, for example, a physical downlink shared channel (physical downlink shared channel, PDSCH) or an acknowledgment (acknowledge, ACK). For example, in semi-persistent scheduling (semi-persistent scheduling, SPS), the terminal device in the sleep state may receive the PDSCH in a periodically configured downlink subframe.

A balance between battery saving and a data delay needs to be considered during selection of the DRX cycle. A long DRX cycle facilitates prolonging of battery use time of the terminal device. However, when there is new data transmission, a short DRX cycle facilitates quicker response. To meet a requirement of the terminal device for the power consumption and the data delay, two DRX cycles may be configured for one terminal device: a short DRX cycle and a long DRX cycle, as shown in FIG. 3. However, at any time, the terminal can use only one of the configurations.

The DRX cycle of the terminal device is usually configured by the network device. For example, the network device may perform a DRX configuration by using radio resource control (radio resource control, RRC) signaling. For the long DRX cycle, a parameter drx-LongCycle indicates a cycle value of the long DRX cycle, and a parameter drx-StartOffset indicates an offset of the long DRX cycle. The two parameters jointly determine a start subframe of the long DRX cycle. For a short DRX cycle, a parameter drx-ShortCycle indicates a cycle value of the short DRX cycle, and a parameter drx-ShortCycleTimer is for configuring a quantity of short DRX cycles. A parameter drx-OnDurationTimer is for configuring a length of an On Duration period in a DRX cycle. A parameter drx-SlotOffset is for configuring a delay of starting a DRX OnDuration timer. To be specific, within a DRC cycle, the DRX OnDuration timer starts after a slot offset indicated by drx-SlotOffset from an On Duration subframe, where drx-SlotOffset is the offset in the subframe and is less than 1 ms.

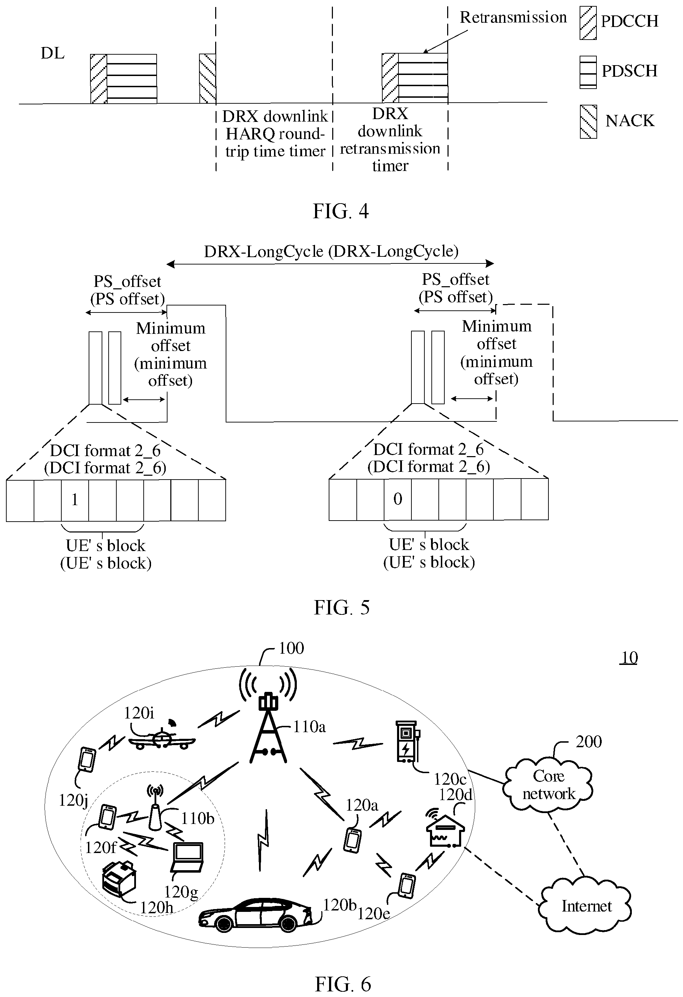

In addition, DRX configuration information further includes a parameter drx-RetransmissionTimerDL and a parameter drx-HARQ-RTT-TimerDL. The parameter drx-RetransmissionTimerDL indicates a DRX downlink retransmission timer, and the parameter drx-HARQ-RTT-TimerDL indicates a DRX downlink hybrid automatic repeat request (hybrid automatic repeat request, HARQ) round-trip time (round-trip Time, RTT) timer. The two parameters are used for downlink data retransmission. After transmission of the PDCCH and the PDSCH is completed, the terminal device feeds back an ACK/NACK. If the terminal device feeds back the NACK, after the ACK/NACK is fed back, a DRX downlink HARQ round-trip time timer starts, where a timing period of the DRX downlink HARQ round-trip time timer is for waiting for the network device to receive and parse the NACK. When the DRX downlink HARQ round-trip time timer expires, the terminal device starts a DRX downlink retransmission timer, and wakes up to monitor the PDCCH to retransmit downlink data, as shown in FIG. 4. When transmission of a to-be-retransmitted HARQ process (process) is completed, the terminal device stops running the DRX downlink retransmission timer.

Similarly, the DRX configuration information further includes a parameter drx-RetransmissionTimerUL and a parameter drx-HARQ-RTT-TimerUL. The parameter drx-RetransmissionTimerUL indicates a DRX uplink retransmission timer, and the parameter drx-HARQ-RTT-TimerUL indicates a DRX uplink HARQ round-trip time timer. The two parameters are used for uplink data retransmission. Different from downlink transmission, after completing PUSCH transmission, the terminal device immediately starts the DRX uplink HARQ round-trip time timer without waiting for feedback from the network device. In other words, the terminal device starts the DRX uplink HARQ round-trip time timer regardless of whether the network device correctly receives the PUSCH. When the DRX uplink HARQ round-trip time timer expires, the terminal device starts the DRX uplink retransmission timer, and the terminal device wakes up to monitor the PDCCH to retransmit uplink data. When receiving downlink control information (downlink control information, DCI) indicating a HARQ process that needs to be retransmitted, the terminal device stops timing of the DRX uplink retransmission timer. To be specific, the terminal device does not need to perform monitoring in an entire configured uplink retransmission (retransmissionUL) time period, but may disable the DRX uplink retransmission timer in advance after receiving the DCI indicating retransmission.

A PDCCH-based wake-up signal (wake-up signal, WUS) may further improve an energy saving effect. The WUS is usually associated with a long DRX cycle to indicate whether to skip monitoring of a PDCCH during an On Duration period of a next long DRX cycle. The WUS may be carried in a DCI format (format 2_6), and configuration information of the WUS may include a parameter ps-Offset-r16 indicating a start monitoring moment of the DCI format 2_6, which begins a time period before the long DRX cycle On Duration. The terminal device stops monitoring the DCI format 2_6 at a minimum offset (minimum offset) before the long DRX cycle On Duration. The minimum offset is related to a capability and a subcarrier of the terminal device. Because the DCI format 2_6 is common DCI, and may include DCI information of a plurality of terminal devices, and information of different terminal devices is located at different locations in the DCI format 2_6, a parameter sizeDCI-2-6-r16 and a parameter ps-PositionDCI-2-6-r16 respectively indicate a length of the DCI format 2_6 and a location of DCI information corresponding to the terminal device in the DCI format 2_6. A parameter ps-WakeUp-r16 indicates a default behavior of the terminal device, to be specific, whether the terminal device normally monitors the PDCCH when the terminal device is configured to monitor the DCI format 2_6 but does not receive corresponding WUS information.

In the DCI format 2_6, the DCI information corresponding to the terminal device may include one bit, for indicating whether the terminal device skips monitoring a PDCCH during On Duration in a next long DRX cycle. When a value of the bit is 1, the terminal device normally monitors a PDCCH in an On Duration period in a next long DRX cycle. When a value of the bit is 0, the terminal device skips monitoring a PDCCH in an On Duration period in a next long DRX cycle.

A diagram of a WUS effect may be shown in FIG. 5. Generally, the terminal device monitors the DCI format 2_6 only during sleep in DRX, and does not monitor the DCI format 2_6 in On Duration. In addition, the terminal device does not monitor more than one DCI format 2_6 in one long DRX cycle.

When a plurality of PUSCH transmission occasions (occasions) are configured in one XR service cycle to transmit XR frame data, each time a PUSCH is transmitted, the terminal device starts a DRX uplink retransmission timer of a HARQ process corresponding to the PUSCH, and the terminal device monitors the PDCCH in a timing period of the DRX uplink retransmission timer. However, frequently starting the timer increases power consumption of the terminal device.

To resolve the foregoing problem, embodiments of this application provide a DRX configuration method, to resolve a problem that a terminal device frequently starts a DRX uplink retransmission timer because the terminal device cannot determine, in time, whether to start the DRX uplink retransmission timer.

The DRX configuration method provided in embodiments of this application may be applied to a system architecture shown in FIG. 6. As shown in FIG. 6, a communication system 10 may include a radio access network (radio access network, RAN) 100 and a core network (core network, CN) 200. The RAN 100 includes at least one RAN node (for example, 110a and 110b in FIG. 6, collectively referred to as 110) and at least one terminal (for example, 120a to 120j in FIG. 6, collectively referred to as 120). The RAN 100 may also include other RAN nodes, such as a wireless relay device and/or a wireless backhaul device (not shown in FIG. 6). The terminal 120 is connected to the RAN node 110 in a wireless manner. The RAN node 110 is connected to the core network 200 in a wireless or wired manner. A core network device in the core network 200 and the RAN node 110 in the RAN 100 may be different physical devices, or may be a same physical device that integrates a logical function of the core network and a logical function of the radio access network.

The RAN 100 may be a cellular system related to the 3^{rd} generation partnership project (3^{rd} generation partnership project, 3GPP), such as a 4G or 5G mobile communication system, or a future-oriented evolution system (such as a 6G mobile communication system). The RAN 100 may alternatively be an open access network (open RAN, O-RAN, or ORAN), a cloud radio access network (cloud radio access network, CRAN), or a wireless fidelity (wireless fidelity, Wi-Fi) system. Alternatively, the RAN 100 may be a communication system that integrates the foregoing two or more systems.

The RAN node 110, sometimes also referred to as an access network device, a RAN entity, an access node, or the like, forms a part of a communication system, to enable a terminal to implement radio access. A plurality of RAN nodes 110 in the communication system 10 may be nodes of a same type, or may be nodes of different types. In some scenarios, roles of the RAN node 110 and the terminal 120 are relative. For example, the network element 120i in FIG. 6 may be a helicopter or an uncrewed aerial vehicle, and may be configured as a mobile base station. For the terminal 120j that accesses the RAN 100 by using the network element 120i, the network element 120i is a base station. However, for the base station 110a, the network element 120i is a terminal. The RAN node 110 and the terminal 120 are sometimes referred to as communication apparatuses. For example, the network elements 110a and 110b in FIG. 6 may be understood as communication apparatuses having a base station function, and the network elements 120a to 120j may be understood as communication apparatuses having a terminal function.

In a possible scenario, the RAN node may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6^{th} generation (6^{th} generation, 6G) mobile communication system, a base station in a future mobile communication system, an access node in a Wi-Fi system, or the like. The RAN node may be a macro base station (for example, 110a in FIG. 6), a micro base station or an indoor base station (for example, 110b in FIG. 6), a relay node or a donor node, or a radio controller in a CRAN scenario. Optionally, the RAN node may alternatively be a server, a wearable device, a vehicle, a vehicle-mounted device, or the like. For example, an access network device in a vehicle to everything (vehicle to everything, V2X) technology may be a road side unit (road side unit, RSU). All or some functions of the RAN node in this application may also be implemented by using a software function running on hardware, or may be implemented by using an instantiated virtualization function on a platform (for example, a cloud platform). Alternatively, the RAN node in this application may be a logical node, a logical module, or software that can implement all or some functions of the RAN node.

In another possible scenario, a plurality of RAN nodes coordinate to assist the terminal in implementing radio access, and different RAN nodes separately implement some functions of a base station. For example, the RAN node may be a central unit (central unit, CU), a distributed unit (distributed unit, DU), a CU-control plane (control plane, CP), a CU-user plane (user plane, UP), a radio unit (radio unit, RU), or the like. The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand their meanings. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination thereof.

The RAN node may also be expressed differently, such as a network device. In this application, unless otherwise specified, a network device is used for description.

The terminal may also be referred to as a terminal device, user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine-type communication (machine-type communication, MTC), internet of things (internet of things, IOT), virtual reality, augmented reality, industrial control, automatic driving, telemedicine, a smart grid, smart furniture, a smart office, smart wearable, smart transportation, and a smart city. The terminal may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. A device form of the terminal is not limited in embodiments of this application.

It may be understood that in the method provided in the following embodiments of this application, an example in which a network device and a terminal device serve as execution entities of interaction illustration is used to describe the method. However, the execution entities of the interaction illustration are not limited in this application. For example, the network device in the method provided in the following embodiments of this application may be a chip, a chip system, or a processor that supports the network device in implementing the method, or may be a logical node, a logical module, or software that can implement all or some functions of the network device. Alternatively, the terminal device in the method provided in the following embodiments of this application may be a chip, a chip system, or a processor that supports the terminal device in implementing the method, or may be a logical node, a logical module, or software that can implement all or some functions of the terminal device.

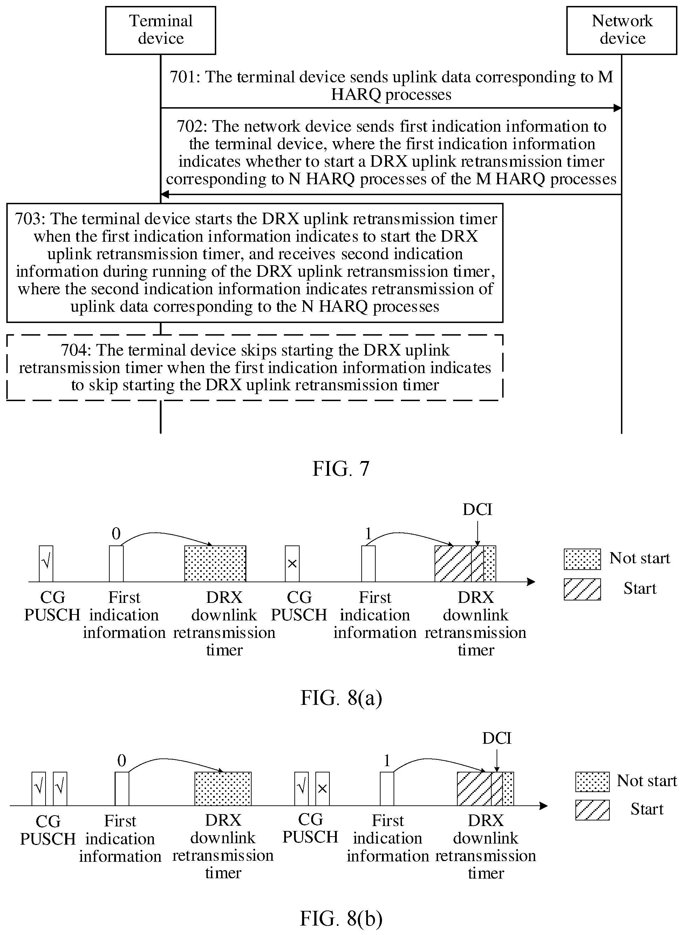

FIG. 7 is a schematic flowchart of a DRX configuration method according to an embodiment of this application. As shown in the figure, the method may include the following steps.

Step 701: A terminal device sends uplink data corresponding to M HARQ processes.

M is an integer greater than or equal to 1.

To support parallel processing of a plurality of data packets, a plurality of HARQ processes (HARQ processes) are supported in NR. One HARQ process may correspond to one data packet (MAC PDU) or one PUSCH, and MAC PDUs or PUSCHs corresponding to the plurality of processes may be processed in parallel. No matter whether a MAC PDU or a PUSCH corresponding to one HARQ process is successfully transmitted, transmission of a MAC PDU or a PUSCH corresponding to another HARQ process is not affected. To ensure that the HARQ processes do not affect each other, both the HARQ round-trip time timer and the HARQ retransmission timer mentioned above are for each HARQ process (per HARQ process). In other words, a network device configures a corresponding HARQ round-trip time timer and a corresponding HARQ retransmission timer for each HARQ process. Currently, in NR, there are a maximum of 16 HARQ processes for uplink transmission, and there are a maximum of 16 HARQ processes for downlink transmission.

Correspondingly, in step 701, the network device (that is, the foregoing RAN node) receives the uplink data corresponding to the M HARQ processes.

The uplink data sent by the terminal device may be a configured grant (configured grant, CG) PUSCH, to be specific, the terminal device sends the PUSCH on a preconfigured resource that can be used to transmit the PUSCH; or the terminal device may send the PUSCH on a resource that is of the PUSCH and that is dynamically scheduled or semi-persistently scheduled by the network device.

Step 702: The network device sends first indication information to the terminal device, where the first indication information indicates whether to start a DRX uplink retransmission timer corresponding to N HARQ processes of the M HARQ processes.

N is a positive integer less than or equal to M.

The network device sends the corresponding first indication information depending on whether the uplink data corresponding to the M HARQ processes is correctly received. Specifically, if the network device correctly receives all the uplink data corresponding to the M HARQ processes, the first indication information sent by the network device may indicate the terminal device not to start the DRX uplink retransmission timer. If not all the uplink data corresponding to the M HARQ processes is correctly received by the network device, the first indication information sent by the network device may indicate the terminal device to start the DRX uplink retransmission timer corresponding to the N HARQ processes, in other words, indicate, to the terminal device, that uplink data corresponding to the N HARQ processes is not correctly received and needs to be retransmitted.

Correspondingly, in step 702, the terminal device receives the first indication information sent by the network device. After sending the uplink data, the terminal device does not need to immediately start to monitor a PDCCH sent by the network device, that is, does not monitor the first indication information sent by using the PDCCH. Because the network device needs a specific period of time to receive and parse the uplink data, if the terminal device immediately monitor the PDCCH after sending the uplink data, power consumption is also caused.

Step 703: The terminal device starts the DRX uplink retransmission timer when the first indication information indicates to start the DRX uplink retransmission timer, and receives second indication information during running of the DRX uplink retransmission timer, where the second indication information indicates retransmission of uplink data corresponding to the N HARQ processes.

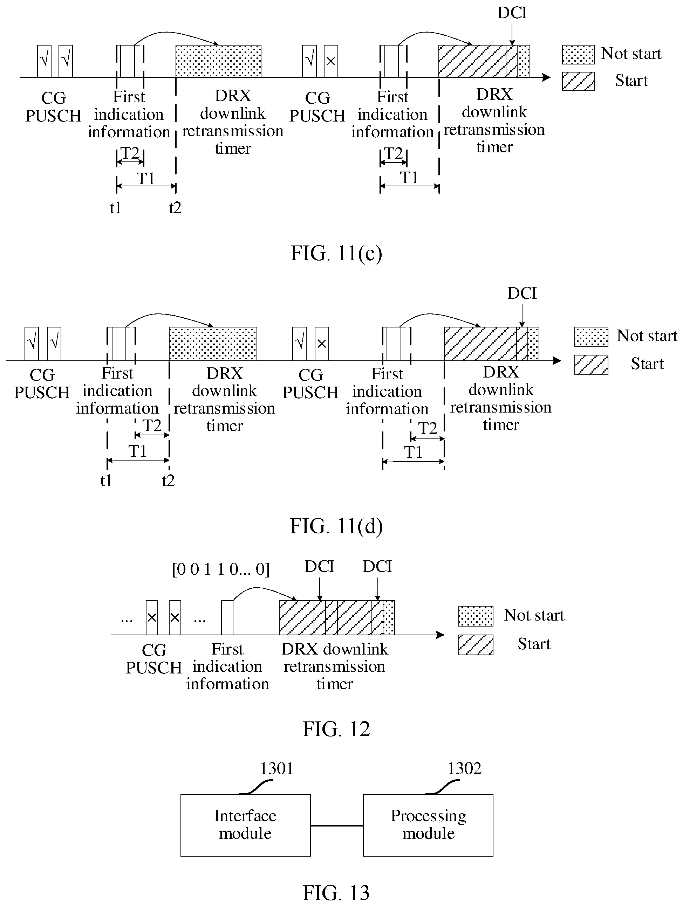

In a possible implementation, a time length of the DRX uplink retransmission timer started by the terminal device is related to a value of N. The time length of the DRX uplink retransmission timer is positively correlated with the value of N. To be specific, a larger value of N indicates a longer time length of the DRX uplink retransmission timer. In a specific embodiment, the terminal device may preconfigure a reference time length of the DRX uplink retransmission timer. The reference time length is a time length of the DRX uplink retransmission timer needed for retransmitting uplink data corresponding to one HARQ process. When the first indication information indicates the terminal device to start the DRX uplink retransmission timer corresponding to the N HARQ processes, a time length of the DRX uplink retransmission timer started by the terminal device is N reference time lengths. For example, in a scenario shown in FIG. 12, the first indication information indicates that uplink data corresponding to two HARQ processes is not correctly received, the terminal device needs to start the DRX uplink retransmission timer, and the time length of the DRX uplink retransmission timer is two reference time lengths.

The second indication information may be DCI, and the DCI may include an identifier of a HARQ process that needs to be retransmitted and/or retransmission resource indication information. The identifier of the HARQ process indicates the uplink data that corresponds to the HARQ process and that needs to be retransmitted by the terminal device. The resource indication information indicates the terminal device to retransmit, on a corresponding resource, the uplink data corresponding to the HARQ process. Optionally, when the first indication information indicates to start the DRX uplink retransmission timer corresponding to the N HARQ processes, the network device may send N pieces of second indication information to the terminal device, where the second indication information indicates an identifier of a HARQ process that needs to be retransmitted and/or retransmission resource indication information. Alternatively, when the first indication information indicates to start the DRX uplink retransmission timer corresponding to the N HARQ processes, the network device may send one piece of second indication information to the terminal device, where the second indication information includes identifiers of the N HARQ processes that need to be retransmitted and/or retransmission resource indication information. After receiving the second indication information, the terminal device may resend, on a retransmission resource indicated by the second indication information, uplink data corresponding to a HARQ process indicated by an identifier of a HARQ process, to complete retransmission, so that the network device can re-receive the uplink data that is not correctly received, thereby implementing service interaction and meeting a service requirement of a user.

The foregoing method procedure may further include step 704: The terminal device skips starting the DRX uplink retransmission timer when the first indication information indicates to skip starting the DRX uplink retransmission timer.

In step 702, the first indication information sent by the network device may be in a plurality of forms to indicate the terminal device whether to start the DRX uplink retransmission timer.

Form 1: The first indication information sent by the network device may include one bit. A value of the bit indicates whether uplink data corresponding to a HARQ process is correctly received. If the uplink data corresponding to the HARQ process is not correctly received, it indicates that retransmission needs to be performed, and the terminal device needs to start the DRX uplink retransmission timer. If the uplink data corresponding to the HARQ process is correctly received, it indicates that retransmission does not need to be performed, in other words, the terminal device does not need to start the DRX uplink retransmission timer.

For example, when the value of the bit is 0, it indicates that all uplink data corresponding to the HARQ process is correctly received, and the terminal device does not need to start the DRX uplink retransmission timer; or when the value of the bit is 1, it indicates that uplink data corresponding to at least one HARQ process is not correctly received, and the terminal device needs to start the DRX uplink retransmission timer. In FIG. 8(a), an example in which the terminal device sends one CG PUSCH (corresponding to one HARQ process) in one cycle (for example, in on duration of one DRX cycle) is used for description. In FIG. 8(b), the terminal device may send a plurality of CG PUSCHs in one cycle. Provided that one CG PUSCH is not correctly received, and the value of the bit corresponding to the first indication information sent by the network device is 1, the terminal device starts the DRX uplink retransmission timer. The network device may specifically indicate, by using the second indication information, a HARQ process that needs to be retransmitted.

Form 2: The network device may send M pieces of first indication information, where the first indication information indicates whether uplink data corresponding to a corresponding HARQ process is correctly received. If the first indication information indicates that the uplink data is correctly received, it indicates that retransmission does not need to be performed, in other words, the terminal device does not need to start the DRX uplink retransmission timer. If the first indication information indicates that the uplink data is not correctly received, it indicates that retransmission needs to be performed, in other words, the terminal device needs to start the DRX uplink retransmission timer.

For example, the terminal device sets different DRX uplink retransmission timers for different HARQ processes, and an i^{th} piece of first indication information sent by the network device indicates whether uplink data corresponding to an i^{th} HARQ process is correctly received. The i^{th} piece of first indication information may include one bit. If a value of the bit is 0, it indicates that the network device correctly receives the uplink data corresponding to the i^{th} HARQ process. In this case, an i^{th} HARQ process does not need to be retransmitted, and the terminal device does not need to start a DRX uplink retransmission timer corresponding to the i^{th} HARQ process. If a value of the bit is 1, it indicates that the network device does not correctly receive the uplink data corresponding to the i^{th} HARQ process. In this case, an i^{th} HARQ process needs to be retransmitted, and the terminal device starts a DRX uplink retransmission timer corresponding to the i^{th} HARQ process.

For another example, the terminal device sets a common DRX uplink retransmission timer for the M HARQ processes. An i^{th} piece of first indication information sent by the network device indicates whether uplink data corresponding to an i^{th} HARQ process is correctly received. The first indication information may include one bit. If a value of the bit is 0, it indicates that the network device correctly receives the uplink data corresponding to the i^{th} HARQ process. If a value of the bit is 1, it indicates that the network device does not correctly receive the uplink data corresponding to the i^{th} HARQ process. For the terminal device, if all the received M pieces of first indication information indicate that the uplink data is correctly received, there is no HARQ process that needs to be retransmitted, and the terminal device does not need to start the DRX uplink retransmission timer. If at least one of the received M pieces of first indication information indicates that the uplink data is not correctly received, it indicates that there is a HARQ process that needs to be retransmitted, and the terminal device needs to start the DRX uplink retransmission timer.

Form 3: The first indication information sent by the network device may indicate whether to start a DRX uplink retransmission timer corresponding to a plurality of HARQ processes.

Optionally, the first indication information sent by the network device may include a bitmap. One HARQ process corresponds to one bit in the bitmap. A value of the bit indicates whether uplink data corresponding to the corresponding HARQ process is correctly received, to indicate whether the terminal device needs to start the DRX uplink retransmission timer. Compared with sending the M pieces of first indication information, this manner facilitates reducing of signaling overheads.

For example, the terminal device sets different DRX uplink retransmission timers for different HARQ processes. An i^{th} bit in the bitmap corresponds to an i^{th} HARQ process. If a value of the i^{th} bit is 0, it indicates that the network device correctly receives uplink data corresponding to the i^{th} HARQ process. In this case, the i^{th} HARQ process does not need to be retransmitted, and the terminal device does not need to start a DRX uplink retransmission timer corresponding to the i^{th} HARQ process. If a value of the i^{th} bit is 1, it indicates that the network device does not correctly receive uplink data corresponding to the i^{th} HARQ process.

Currently, there may be 16 HARQ processes in uplink transmission, and the bitmap may include 16 bits. Alternatively, if a future communication system allows more uplink HARQ processes, the bitmap may include more bits. Alternatively, a quantity of bits included in the bitmap may be equal to M. For example, if there are four HARQ processes, the bitmap may include four bits, which respectively correspond to a 1^{st} HARQ process, a 2^{nd} HARQ process, a 3^{rd} HARQ process, and a 4^{th} HARQ process. If the network device does not receive uplink data corresponding to the 3^{rd} HARQ process, the first indication information sent by the network device may be 0010, where a value of a 3^{rd} bit is 1, indicating that the uplink data corresponding to the 3^{rd} HARQ process is not correctly received, and the terminal device needs to start a DRX uplink retransmission timer corresponding to the 3^{rd} HARQ process.

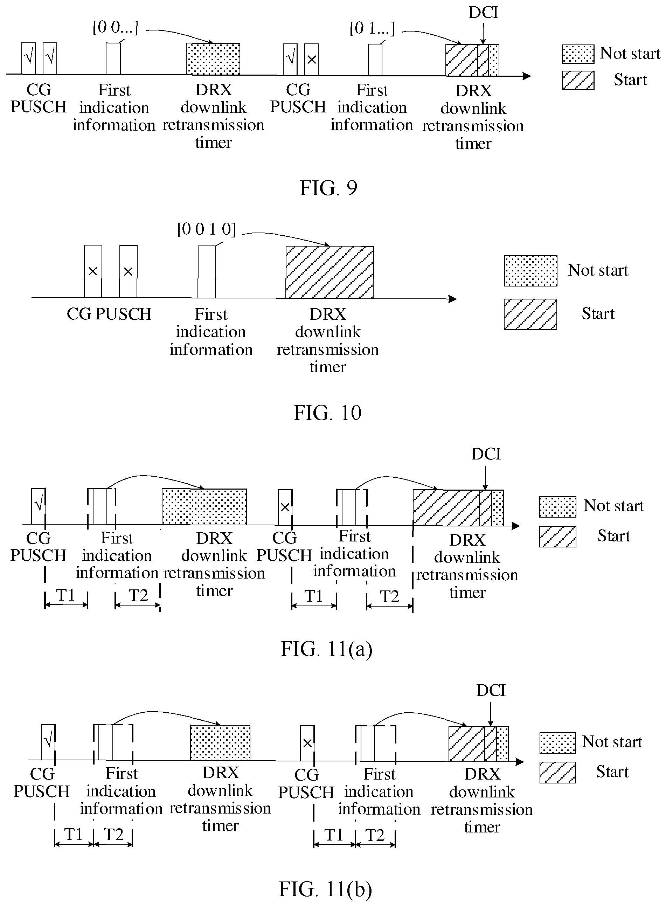

For another example, the terminal device sets a common DRX uplink retransmission timer for the M HARQ processes. An i^{th} bit in the bitmap corresponds to an i^{th} HARQ process. If the bitmap indicates that all uplink data corresponding to the M HARQ processes is correctly received, there is no HARQ process that needs to be retransmitted, and the terminal device does not need to start the DRX uplink retransmission timer. If at least one bit in the bitmap indicates that the uplink data corresponding to the HARQ process is not correctly received, it indicates that there is a HARQ process that needs to be retransmitted, and the terminal device needs to start the DRX uplink retransmission timer. As shown in FIG. 9, uplink data corresponding to a 2^{nd} HARQ process is not correctly received. Therefore, a value of a 2^{nd} bit in the bitmap is 1, indicating that the terminal device needs to start the DRX uplink retransmission timer.

Form 4: The first indication information sent by the network device may further indicate information about N, that is, the first indication information may indicate a value of N.

For example, if there are 16 HARQ processes in uplink transmission, four bits may indicate a quantity of HARQ processes in the 16 HARQ processes corresponding to uplink data that is not correctly received. In the 16 HARQ processes, if the network device does not correctly receive uplink data corresponding to two HARQ processes, the first indication information sent by the network device may be 0010 (which is converted into 2 in decimal), indicating that the uplink data corresponding to the two HARQ processes is not correctly received, and the terminal device needs to start the DRX uplink retransmission timer, as shown in FIG. 10.

Optionally, regardless of which form is used for the first indication information to indicate the terminal device whether to start the DRX uplink retransmission timer, the first indication information may be carried in a WUS, or may be carried in a low power-wake-up signal (low power-wake-up signal, LP-WUS), or may be carried in DFI and sent to the terminal device.

Start time at which the terminal device monitors the first indication information, that is, start time at which the network device sends the first indication information, may be determined in any one of the following manners.

Manner 1: After sending the uplink data corresponding to the HARQ process, the terminal device may start a DRX uplink HARQ round-trip time timer. After the DRX uplink HARQ round-trip time timer ends or expires, the terminal device may start to monitor the first indication information sent by the network device. In other words, a time length T1 in FIG.11(a) or FIG. 11(b) is a timing time length of the DRX uplink HARQ round-trip time timer. A timing period of the DRX uplink HARQ round-trip time timer is used for waiting for the network device to receive and parse the uplink data. During the timing period of the DRX uplink HARQ round-trip time timer, the terminal device does not need to monitor a PDCCH sent by the network device, to lower power consumption of the terminal device.

If the network device sends one piece of common first indication information for the M HARQ processes, the terminal device may start the DRX uplink HARQ round-trip time timer after sending uplink data corresponding to a last HARQ process. If the network device sends one piece of first indication information for each HARQ process, the terminal device may start, after sending uplink data corresponding to one HARQ process, a DRX uplink HARQ round-trip time timer corresponding to the HARQ process.

Manner 2: After sending the uplink data corresponding to the HARQ process, the terminal device starts to monitor the first indication information sent by the network device after a first time length. The first time length, that is, the time length T1 shown in FIG.11(a) or FIG. 11(b), is used for waiting for the network device to receive and parse the uplink data. In the first time length, the terminal device does not need to monitor the PDCCH sent by the network device, to lower power consumption of the terminal device.

The first time length may be a downlink feedback information (downlink feedback indicator, DFI) delay time length (cg-minDFI-Delay). The cg-minDFI-Delay is an existing field in a current communication system, and indicates minimum duration (in a unit of a symbol) from an end symbol of the PUSCH to a start symbol of the PDCCH. The PDCCH includes the first indication information.

Alternatively, the first time length may indicate a time length of the first time length by defining a new field. For example, a new field HARQ-feedback-delay (HARQ-feedback-delay) may be configured in RRC signaling to indicate the time length of the first time length, and the first time length indicated by the field may not only indicate a first time length corresponding to the dynamic or semi-persistently scheduled PUSCH, but also indicate a first time length corresponding to a CG PUSCH.

If the network device sends one piece of common first indication information for the M HARQ processes, after sending uplink data corresponding to a last HARQ process, the terminal device may start to monitor, after the first time length, the first indication information sent by the network device. If the network device sends one piece of first indication information for each HARQ process, after sending uplink data corresponding to one HARQ process, the terminal device may start to monitor, after the first time length, the first indication information that corresponds to the HARQ process and that is sent by the network device.

Manner 3: The start time at which the terminal device monitors the first indication information may alternatively be a moment that is a second time length before the terminal device starts the DRX uplink retransmission timer.

As shown in FIG. 11(c) or FIG. 11(d), after sending the PUSCH, if the terminal device needs to start the DRX uplink retransmission timer, the terminal device needs to start the DRX uplink retransmission timer at a moment t2. In this case, the terminal device may start to monitor the first indication information at a moment t1=t2-T1, where T1 represents the second time length. Optionally, the second time length may be preconfigured in a protocol, or may be configured by the network device. Alternatively, the second time length may be a timing time length of a DRX uplink HARQ round-trip time timer, or may be a time length indicated by cg-minDFI-Delay.

If the terminal device sets a common DRX uplink retransmission timer for the M HARQ processes, the second time length is subtracted from a moment at which the common DRX uplink retransmission timer is started, and the terminal device may start to monitor the first indication information at a corresponding moment. If the terminal device sets different DRX uplink retransmission timers for different HARQ processes, the second time length is subtracted from a moment at which a DRX uplink retransmission timer is started, and the terminal device starts to monitor the first indication information corresponding to the HARQ process at a corresponding moment.

The above describes a manner in which the terminal device determines the start time of monitoring the first indication information. The following describes a manner in which the terminal device determines end time of monitoring the first indication information.

In a possible implementation, the terminal device may determine, based on a third time length, the end time of monitoring the first indication information. To be specific, time that is reached after the third time length elapses from the start time of monitoring the first indication information is time at which the terminal device stops monitoring the first indication information. For example, T2 in FIG. 11(b) or FIG. 11(c) represents the third time length. The third time length may be preconfigured in the terminal device, or may be configured by the network device. In this case, the network device needs to send the first indication information to the terminal device after the start time starts and before the third time length is reached. The terminal device monitors the first indication information after the start time starts and at a moment when the third time length is reached. After the moment when the third time length is reached, the terminal device no longer monitors the first indication information. If the terminal device receives, before the third time length is reached, the first indication information sent by the network device, the terminal device may no longer need to continue to monitor the first indication information, and determine, based on the first indication information, whether to start the DRX uplink retransmission timer.

In another possible implementation, the terminal device may alternatively determine, based on a minimum offset, the end time of monitoring the first indication information. The minimum offset indicates that the terminal device stops monitoring the first indication information at a moment of a minimum offset before starting the DRX uplink retransmission timer. If the terminal device receives the first indication information in a time that is less than the minimum offset before the DRX uplink retransmission timer is started, the terminal device may not start the DRX uplink retransmission timer in time, and consequently misses receiving the second indication information. Therefore, the network device needs to send the first indication information to the terminal device before a moment of the minimum offset before the terminal device starts the DRX uplink retransmission timer, and the terminal device stops monitoring the first indication information at the moment of the minimum offset before the terminal device starts the DRX uplink retransmission timer. For example, T2 in FIG.11(a) or FIG. 11(d) represents the minimum offset. If the terminal device receives, before the moment of the minimum offset before the terminal device starts the DRX uplink retransmission timer, the first indication information sent by the network device, the terminal device may no longer need to continue to monitor the first indication information, and determine, based on the first indication information, whether to start the DRX uplink retransmission timer.

If the terminal device determines, based on the received first indication information, to start the DRX uplink retransmission timer, the terminal device monitors, during running of the DRX uplink retransmission timer, the second indication information sent by the network device. As described above, the terminal device may set a corresponding DRX uplink retransmission timer for each HARQ process. In this case, the terminal device monitors, during timing of the DRX uplink retransmission timer, second indication information that is of a HARQ process corresponding to the DRX uplink retransmission timer and that is sent by the network device. Alternatively, the terminal device may set a common DRX uplink retransmission timer for the M HARQ processes. In this case, the terminal device monitors, during timing of the common DRX uplink retransmission timer, second indication information sent by the network device. The second indication information may include N pieces of second indication information, and the second indication information indicates retransmission of uplink data corresponding to a corresponding HARQ process, or one piece of second indication information may indicate retransmission of uplink data corresponding to N HARQ processes.

When the terminal device sets a corresponding DRX uplink retransmission timer for each HARQ process, the terminal device monitors, during running of a DRX uplink retransmission timer, the second indication information sent by the network device for the HARQ process. If the terminal device receives, in a running process of the DRX uplink retransmission timer, the second indication information for the HARQ process, the terminal device may immediately stop the DRX uplink retransmission timer for the HARQ process regardless of whether timing of the DRX uplink retransmission timer ends.

When the terminal device sets a common DRX uplink retransmission timer for the M HARQ processes, and the network device sends N pieces of second indication information for the N HARQ processes, the terminal device monitors, during running of the common DRX uplink retransmission timer, the N pieces of second indication information sent by the network device. If the terminal device receives the N pieces of second indication information in the running process of the common DRX uplink retransmission timer, the terminal device may immediately stop the DRX uplink retransmission timer regardless of whether timing of the DRX uplink retransmission timer ends.

When the terminal device sets a common DRX uplink retransmission timer for the M HARQ processes, but the network device sends one piece of second indication information for the N HARQ processes, the terminal device monitors, during running of the common DRX uplink retransmission timer, one piece of second indication information sent by the network device. If the terminal device receives one piece of second indication information in the running process of the common DRX uplink retransmission timer, the terminal device may immediately stop the DRX uplink retransmission timer regardless of whether timing of the DRX uplink retransmission timer ends.

In the DRX configuration method provided in the foregoing embodiment of this application, a network device notifies, in time by using the first indication information, the terminal device whether to stat the DRX uplink retransmission timer. Therefore, the terminal device can determine, in time based on the first indication information, whether to start the DRX uplink retransmission timer. When there is uplink data corresponding to a HARQ process that needs to be retransmitted, the terminal device starts the DRX uplink retransmission timer. When there is no uplink data corresponding to a HARQ process that needs to be retransmitted, the terminal device does not need to start the DRX uplink retransmission timer, thereby lowering power consumption of the terminal device.

Based on a same technical concept, an embodiment of this application further provides a communication apparatus, including modules/units for performing the terminal device in the foregoing method embodiment. The apparatus may be a terminal device, or may be a component (for example, a processor, a chip, or a chip system) of the terminal device, or may be a logical node, a logical module, or software that can implement all or some functions of the terminal device. These modules/units may be implemented by hardware, or may be implemented by hardware executing corresponding software.

For example, as shown in FIG. 13, the communication apparatus may include an interface module 1301 and a processing module 1302. The interface module 1301 is configured to receive and send a message, and the processing module 1302 is configured to implement message processing by the communication apparatus. It should be understood that, in this embodiment of this application, the processing module 1302 may be implemented by a processor or a processor-related circuit component (or referred to as a processing circuit). The interface module 1301 may be implemented by a transceiver or a transceiver-related circuit component.

Specifically, the interface module 1301 is configured to send uplink data corresponding to M HARQ processes, where M is an integer greater than or equal to 1. The interface module 1301 is further configured to receive first indication information, where the first indication information indicates whether to start a DRX uplink retransmission timer corresponding to N HARQ processes of the M HARQ processes, and N is a positive integer less than or equal to M. The processing module 1302 is configured to start the DRX uplink retransmission timer when the first indication information indicates to start the DRX uplink retransmission timer; and when the DRX uplink retransmission timer runs, the interface module 1301 is further configured to receive second indication information, where the second indication information indicates retransmission of uplink data corresponding to the N HARQ processes.

In addition, the foregoing modules may be further configured to support another process performed by the terminal device in embodiments shown in FIG. 7 to FIG. 12. For beneficial effects, refer to the foregoing descriptions. Details are not described herein again.

Based on a same technical concept, an embodiment of this application further provides a communication apparatus, including modules/units for performing the network device in the foregoing method embodiment. The apparatus may be a network device, or may be a component (for example, a processor, a chip, or a chip system) of the network device, or may be a logical node, a logical module, or software that can implement all or some functions of the network device. These modules/units may be implemented by hardware, or may be implemented by hardware executing corresponding software.

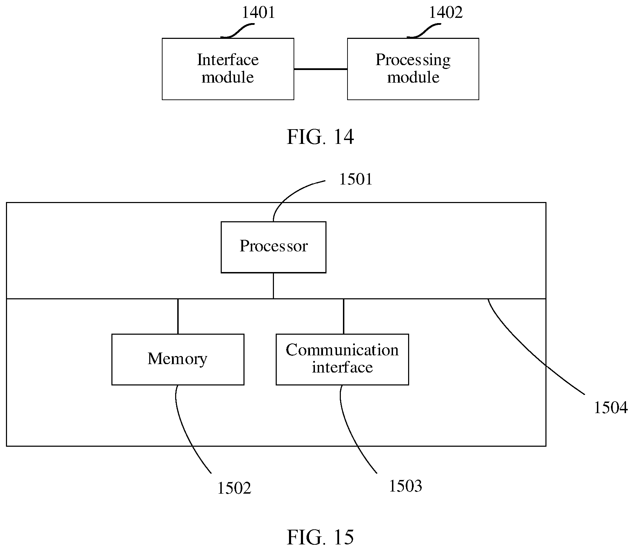

For example, as shown in FIG. 14, the communication apparatus may include an interface module 1401 and a processing module 1402. The interface module 1401 is configured to receive and send a message, and the processing module 1402 is configured to implement message processing by the communication apparatus. It should be understood that, in this embodiment of this application, the processing module 1402 may be implemented by a processor or a processor-related circuit component (or referred to as a processing circuit). The interface module 1401 may be implemented by a transceiver or a transceiver-related circuit component.

Specifically, the interface module 1401 is configured to receive uplink data corresponding to M HARQ processes, where M is an integer greater than or equal to 1. The interface module 1401 is further configured to send first indication information, where the first indication information indicates whether to start a DRX uplink retransmission timer corresponding to N HARQ processes of the M HARQ processes, and N is a positive integer less than or equal to M. If the first indication information indicates to start the DRX uplink retransmission timer, the processing module 1402 is configured to start the DRX uplink retransmission timer, and the interface module 1401 is further configured to send second indication information when the DRX uplink retransmission timer runs, where the second indication information indicates retransmission of uplink data corresponding to the N HARQ processes.

In a possible implementation, the first indication information indicates whether to start a DRX uplink retransmission timer corresponding to one HARQ process.

In a possible implementation, the first indication information indicates whether to start a DRX uplink retransmission timer corresponding to a plurality of HARQ processes.

In a possible implementation, a plurality of HARQ processes correspond to one DRX uplink retransmission timer.

In a possible implementation, a plurality of HARQ processes respectively correspond to a plurality of DRX uplink retransmission timers.

In a possible implementation, the first indication information includes information indicating N.

In a possible implementation, a timing time length of the DRX uplink retransmission timer is related to N.

In a possible implementation, when sending the first indication information, the interface module 1401 is specifically configured to send the first indication information from a first moment, where the first moment is one of the following: a moment after a first time length since the end of sending the uplink data, where the first time length is a downlink feedback information DFI delay time length; or an expiration moment of an uplink HARQ round-trip time timer.

In a possible implementation, the first indication information is carried in a wake-up signal WUS; or the first indication information is carried in a low power WUS; or the first indication information is included in DFI.

In addition, the foregoing modules may be further configured to support another process performed by the terminal device in embodiments shown in FIG. 7 to FIG. 12. For beneficial effects, refer to the foregoing descriptions. Details are not described herein again.

Based on a same technical concept, an embodiment of this application further provides a communication apparatus. The communication apparatus includes a processor 1501 shown in FIG. 15, and the processor 1501 is coupled to a memory 1502. Further, the communication apparatus may further include a communication interface 1503 and a communication bus 1504.

The processor 1501 may be a general-purpose processor, a microprocessor, an application specific integrated circuit (application specific integrated circuit, ASIC), a field programmable gate array (field programmable gate array, FPGA) or another programmable logic device, a discrete gate or a transistor logic device, one or more integrated circuits configured to control program execution of the solutions in this application, or the like. The general purpose processor may be a microprocessor, any conventional processor, or the like. The steps of the method disclosed with reference to embodiments of this application may be directly performed by a hardware processor, or may be performed by using a combination of hardware in the processor and a software module.

The memory 1502 is configured to store program instructions and/or data, so that the processor 1501 invokes the instructions and/or the data stored in the memory 1502, to implement the foregoing functions of the processor 1501. The memory 1502 may be a read-only memory (read-only memory, ROM) or another type of static storage device capable of storing static information and instructions, a random access memory (random access memory, RAM) or another type of dynamic storage device capable of storing information and instructions, or may be an electrically erasable programmable read-only memory (electrically erasable programmable read-only memory, EEPROM) or any other medium that can be used to carry or store expected program code in a form of instructions or a data structure and that is accessible by a computer, but is not limited thereto. The memory 1502 may exist independently, for example, an off-chip memory, and is connected to the processor 1501 through the communication bus 1504. Alternatively, the memory 1502 may be integrated with the processor 1501.

The communication interface 1503 uses any apparatus such as a transceiver to communicate with another device or a communication network such as an Ethernet, a radio access network (radio access network, RAN), or a wireless local area network (wireless local area network, WLAN). In this embodiment of this application, the processor 1501 is configured to: invoke the communication interface 1503 to perform a receiving and/or sending function, and perform the method according to any one of the foregoing possible implementations.

The communication bus 1504 may include a path for information transmission between the foregoing components.

For example, the communication apparatus may be the terminal device in the foregoing method embodiments, or may be a component (for example, a processor, a chip, or a chip system) of the terminal device, or may be a logical node, a logical module, or software that can implement all or some functions of the terminal device. Alternatively, the communication apparatus may be the network device in the foregoing method embodiments, or may be a component (for example, a processor, a chip, or a chip system) of the network device, or may be a logical node, a logical module, or software that can implement all or some functions of the network device.

When the communication device is a terminal device, the processor 1501 is configured to perform the following steps: sending, through the communication interface 1503, uplink data corresponding to M hybrid automatic repeat request HARQ processes, where M is an integer greater than or equal to 1; receiving first indication information through the communication interface 1503, where the first indication information indicates whether to start a discontinuous reception DRX uplink retransmission timer corresponding to N HARQ processes of the M HARQ processes, and N is a positive integer less than or equal to M; and starting the DRX uplink retransmission timer when the first indication information indicates to start the DRX uplink retransmission timer, and receiving second indication information through the communication interface 1503 when the DRX uplink retransmission timer runs, where the second indication information indicates retransmission of uplink data corresponding to the N HARQ processes.

In a possible implementation, the first indication information indicates whether to start a DRX uplink retransmission timer corresponding to one HARQ process.

In a possible implementation, the first indication information indicates whether to start a DRX uplink retransmission timer corresponding to a plurality of HARQ processes.

In a possible implementation, a plurality of HARQ processes correspond to one DRX uplink retransmission timer.

In a possible implementation, a plurality of HARQ processes respectively correspond to a plurality of DRX uplink retransmission timers.

In a possible implementation, the first indication information includes information indicating N.

In a possible implementation, a timing time length of the DRX uplink retransmission timer is related to N.

In a possible implementation, when receiving the first indication information through the communication interface 1503, the processor 1501 is specifically configured to: receive the first indication information from a first moment through the communication interface 1503, where the first moment is one of the following: a moment after a first time length since the end of sending the uplink data, where the first time length is a downlink feedback information DFI delay time length, or the first time length is configured by the network device, for example, a network adds a new parameter in control signaling to configure the first time length, or configures a new timer, and a timing time length of the new timer is the first time length; or an expiration moment of an uplink HARQ round-trip time timer.

In a possible implementation, after receiving the second indication information, the processor 1501 is further configured to stop running the DRX uplink retransmission timer.

In a possible implementation, the processor 1501 is further configured to skip starting the DRX uplink retransmission timer when the first indication information indicates to skip starting the DRX uplink retransmission timer.

In a possible implementation, the first indication information is carried in a wake-up signal WUS; or the first indication information is carried in a low power WUS; or the first indication information is included in DFI.

When the communication device is a network device, the processor 1501 is configured to perform the following steps: receiving, through the communication interface 1503, uplink data corresponding to M hybrid automatic repeat request HARQ processes, where M is an integer greater than or equal to 1; sending first indication information through the communication interface 1503, where the first indication information indicates whether to start a discontinuous reception DRX uplink retransmission timer corresponding to N HARQ processes of the M HARQ processes, and N is a positive integer less than or equal to M; and starting the DRX uplink retransmission timer when the first indication information indicates to start the DRX uplink retransmission timer, and sending second indication information through the communication interface 1503, when the DRX uplink retransmission timer runs, where the second indication information indicates retransmission of uplink data corresponding to the N HARQ processes.

In a possible implementation, the first indication information indicates whether to start a DRX uplink retransmission timer corresponding to one HARQ process.

In a possible implementation, the first indication information indicates whether to start a DRX uplink retransmission timer corresponding to a plurality of HARQ processes.

In a possible implementation, a plurality of HARQ processes correspond to one DRX uplink retransmission timer.

In a possible implementation, a plurality of HARQ processes respectively correspond to a plurality of DRX uplink retransmission timers.

In a possible implementation, the first indication information includes information indicating N.

In a possible implementation, a timing time length of the DRX uplink retransmission timer is related to N.

In a possible implementation, when sending the first indication information through the communication interface 1503, the processor 1501 is specifically configured to send the first indication information from a first moment, where the first moment is one of the following: a moment after a first time length since the end of sending the uplink data, where the first time length is a downlink feedback information DFI delay time length; or an expiration moment of an uplink HARQ round-trip time timer.

In a possible implementation, the first indication information is carried in a wake-up signal WUS; or the first indication information is carried in a low power WUS; or the first indication information is included in DFI.

Based on a same technical concept, an embodiment of this application further provides a computer-readable storage medium. The computer-readable storage medium stores computer-readable instructions. When the computer-readable instructions run on a computer, the method according to any one of the foregoing possible implementations is performed.

An embodiment of this application provides a computer program product including instructions. When the computer program product runs on a computer, the method embodiments are performed.

In this embodiment of this application, "sending information to... (terminal)" may be understood as that a destination end of the information is the terminal, and may include directly or indirectly sending information to the terminal. "Receiving information from... (terminal)" may be understood as that a source end of the information is a terminal, and may include directly or indirectly receiving information from the terminal. The information may be processed between the information sending source end and destination end, for example, a format change. However, the destination end may understand valid information from the source end. Similar descriptions in this application may be understood similarly, and details are not described again.

In descriptions of embodiments of this application, the term "and/or" describes an association relationship between associated objects and indicates that three relationships may exist. For example, A and/or B may indicate the following three cases: Only A exists, both A and B exist, and only B exists. "A plurality of" in this application means two or more.

In addition, it should be understood that in description of this application, terms such as "first" and "second" are merely used for distinguishing and description, but should not be understood as indicating or implying relative importance, or should not be understood as indicating or implying a sequence. Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk drive, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a base station or a terminal. Certainly, the processor and the storage medium may exist in a base station or terminal as discrete components.

All or some of the foregoing embodiments may be implemented by using software, hardware, firmware, or any combination thereof. When software is used to implement the foregoing embodiments, all or some of the foregoing embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk drive, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, wherein the method comprises:
sending uplink data corresponding to M hybrid automatic repeat request HARQ processes, wherein M is an integer greater than or equal to 1;
receiving first indication information, wherein the first indication information indicates whether to start a discontinuous reception DRX uplink retransmission timer corresponding to N HARQ processes of the M HARQ processes, and N is a positive integer less than or equal to M; and
starting the DRX uplink retransmission timer when the first indication information indicates to start the DRX uplink retransmission timer, and receiving second indication information when the DRX uplink retransmission timer runs, wherein the second indication information indicates retransmission of uplink data corresponding to the N HARQ processes.

2. The method according to claim 1, wherein the first indication information indicates whether to start a DRX uplink retransmission timer corresponding to one HARQ process.

3. The method according to claim 1, wherein the first indication information indicates whether to start a DRX uplink retransmission timer corresponding to a plurality of HARQ processes.

4. The method according to claim 3, wherein the plurality of HARQ processes correspond to one DRX uplink retransmission timer.

5. The method according to claim 3, wherein the plurality of HARQ processes respectively correspond to a plurality of DRX uplink retransmission timers.

6. The method according to any one of claims 1 to 5, wherein the first indication information comprises information indicating N.

7. The method according to any one of claims 1 to 6, wherein a timing time length of the DRX uplink retransmission timer is related to N.

8. The method according to any one of claims 1 to 7, wherein receiving the first indication information comprises:
receiving the first indication information from a first moment, wherein
the first moment is one of the following:
a moment after a first time length since the end of sending the uplink data, wherein the first time length is a downlink feedback information DFI delay time length; or
an expiration moment of an uplink HARQ round-trip time timer.

9. The method according to any one of claims 1 to 8, wherein after receiving the second indication information, the method further comprises:
stopping running the DRX uplink retransmission timer.

10. The method according to any one of claims 1 to 9, wherein the method further comprises:
skipping starting the DRX uplink retransmission timer when the first indication information indicates to skip starting the DRX uplink retransmission timer.

11. The method according to any one of claims 1 to 10, wherein the first indication information is carried in a wake-up signal WUS; or
the first indication information is carried in a low power WUS; or
the first indication information is comprised in DFI.

12. A communication apparatus, comprising:
an interface module, configured to send uplink data corresponding to M hybrid automatic repeat request HARQ processes, wherein M is an integer greater than or equal to 1, wherein
the interface module is further configured to receive first indication information, wherein the first indication information indicates whether to start a discontinuous reception DRX uplink retransmission timer corresponding to N HARQ processes of the M HARQ processes, and N is a positive integer less than or equal to M; and
a processing module, configured to start the DRX uplink retransmission timer when the first indication information indicates to start the DRX uplink retransmission timer, wherein
when the DRX uplink retransmission timer runs, the interface module is further configured to receive second indication information, wherein the second indication information indicates retransmission of uplink data corresponding to the N HARQ processes.

13. The apparatus according to claim 12, wherein the first indication information indicates whether to start a DRX uplink retransmission timer corresponding to one HARQ process.

14. The apparatus according to claim 12, wherein the first indication information indicates whether to start a DRX uplink retransmission timer corresponding to a plurality of HARQ processes.

15. The apparatus according to claim 14, wherein the plurality of HARQ processes correspond to one DRX uplink retransmission timer.

16. The apparatus according to claim 14, wherein the plurality of HARQ processes respectively correspond to a plurality of DRX uplink retransmission timers.

17. The apparatus according to any one of claims 12 to 16, wherein the first indication information comprises information indicating N.

18. The apparatus according to any one of claims 12 to 17, wherein a timing time length of the DRX uplink retransmission timer is related to N.

19. The apparatus according to any one of claims 12 to 18, wherein when receiving the first indication information, the interface module is specifically configured to:
receive the first indication information from a first moment, wherein
the first moment is one of the following:
a moment after a first time length since the end of sending the uplink data, wherein the first time length is a downlink feedback information DFI delay time length; or
an expiration moment of an uplink HARQ round-trip time timer.

20. The apparatus according to any one of claims 12 to 19, wherein after the interface module receives the second indication information, the processing module is further configured to:
stop running the DRX uplink retransmission timer.

21. The apparatus according to any one of claims 12 to 20, wherein the processing module is further configured to:
skip starting the DRX uplink retransmission timer when the first indication information indicates to skip starting the DRX uplink retransmission timer.

22. The apparatus according to any one of claims 12 to 21, wherein the first indication information is carried in a wake-up signal WUS; or
the first indication information is carried in a low power WUS; or
the first indication information is comprised in DFI.

23. A communication device, comprising a processor, wherein the processor is coupled to a memory, the memory is configured to store a program or instructions, and when the program or the instructions are executed by the processor, the device is enabled to perform the method according to any one of claims 1 to 11.

24. A computer-readable storage medium, wherein the computer-readable storage medium stores instructions, and when the instructions are run on a computer, the computer is enabled to perform the method according to any one of claims 1 to 11.

25. A computer program product comprising instructions, wherein when the instructions are run on a computer, the computer is enabled to perform the method according to any one of claims 1 to 11.
